## Europäisches Patentamt

## European Patent Office

## Office européen des brevets

(19)

(11) Veröffentlichungsnummer: **0 187 683**
**B1**

(12) **EUROPÄISCHE PATENTSCHRIFT**

(45) Veröffentlichungstag der Patentschrift:
**21.03.90**

(21) Anmeldenummer: **86100677.3**

(22) Anmeldetag: **06.10.83**

(60) Veröffentlichungsnummer der früheren Anmeldung
nach Art. 76 EPÜ: **0108266**

(51) Int. Cl.⁴: **B01D 19/00, F24D 19/08**

(54) **Entgasungsvorrichtung.**

(30) Priorität: **06.10.82 DE 3237023**

(43) Veröffentlichungstag der Anmeldung:
**16.07.86 Patentblatt 86/29**

(45) Bekanntmachung des Hinweises auf die Patenterteilung:
**21.03.90 Patentblatt 90/12**

(84) Benannte Vertragsstaaten:
**AT BE CH DE FR GB IT LI LU NL SE**

(56) Entgegenhaltungen:
**DE-A- 2 917 389**
**FR-A- 2 419 097**
**GB-A- 984 307**

(73) Patentinhaber: **Bernstein, Hans-Friedrich,**
**Madeleine-Ruoff-Strasse 24, D-8036 Herrsching(DE)**

(72) Erfinder: **Bernstein, Hans-Friedrich,**
**Madeleine-Ruoff-Strasse 24, D-8036 Herrsching(DE)**

(74) Vertreter: **Frohwitter, Bernhard, Dipl.-Ing. et al,**
**Bardehle-Pagenberg-Dost-Altenburg**
**Frohwitter-Geissler & Partner**
**Galileiplatz 1 Postfach 86 06 20, D-8000 München 86(DE)**

## Beschreibung

Die Erfindung betrifft eine Entgasungsvorrichtung für Flüssigkeitsströme, insbesondere eine Vorrichtung zum Entlüften von Wärmetausch-Kreisläufen, wie sie beispielsweise in Heizungsanlagen anzutreffen sind.

Hydraulische Systeme, insbesondere Heizungssysteme, können im allgemeinen nie derart gefüllt werden, daß keinerlei Luftblasen mehr im System übrig bleiben. Darüber hinaus tritt durch Undichtigkeiten und durch Diffusion (z.B. bei Bodenheizung in Kunststoffrohren) Gas, insbesondere Sauerstoff in die Leitung ein und verursacht Geräusche, Korrosion der Anlagenteile und eine Absenkung des Wirkungsgrades der Anlage. Man begegnet diesen Schwierigkeiten im allgemeinen dadurch, daß man das Heizungssystem über entsprechend angebrachte Entlüftungsventile immer wieder entlüftet, was jedoch äußerst zeitraubend, lästig und ungenügend ist.

Es sind auch "automatische" Entlüftungsventile gebräuchlich, die mit den Leitungen in Verbindung stehen und so in sie eindringende Luft über ein Schwimmerventil ablassen sollen. Es zeigte sich jedoch, daß diese Vorrichtungen annähernd völlig untauglich sind, da die im Kreislauf-Wasser mitgeführte Luft gar nicht durch die eine vorgesehene Leitung in die Abscheidebehälter eindringt und somit auch nicht entweichen kann.

Um diesem Problem abzuhelfen, wurde die unter der Handelsbezeichnung SPIROVENT vertriebene "Absorptions-Entgasung" vorgeschlagen. Bei diesem Gerät läuft der gesamte Flüssigkeitsstrom über einen Entgasungsbehälter. Im Entgasungsbehälter sind Mittel vorgesehen, um eine laminare Strömung zu schaffen, in der Gasblasen leicht aufsteigen können. Da die Vorrichtung nach dem Kessel, also am Punkt der höchsten Wassertemperatur angebracht wird, besitzt das durchströmende Wasser eine nur geringe Aufnahmebereitschaft für darin gelöste Gase. Die nach oben aufsteigenden Gasperlen sammeln sich in einem Raum, der durch ein Schwimmerventil bei absinkendem Flüssigkeitsspiegel mit der Umgebung in Verbindung gebracht werden kann, so daß bei genügender Gasansammlung das Gas entweichen kann. Eine derartige Anlage soll die im Kreislauf eingeschlossenen Luftblasen dadurch entfernen, daß dem Kreislauf mit Gas ungesättigtes Medium zugeführt wird, so daß die eingeschlossene Luft vom Medium bis zur Sättigung absorbiert werden kann. Bei dem bekannten Gerät wird davon ausgegangen, daß bei der Vorlauftemperatur im Kreislaufmedium weniger Gas gelöst werden kann, als bei der Rücklauftemperatur. Zum einen befinden sich jedoch oft größere Luftmengen gerade in den Anlagenteilen, welche die Vorlauftemperatur aufweisen (z.B. in der Umwälzpumpe), zum anderen ist die Löslichkeitsdifferenz entsprechend der niedrigen Temperaturdifferenz zwischen Vorlauf und Rücklauf nur äußerst gering, so daß eine wirksame Absorption nicht erwartet werden kann.

Aus der britischen Patentschrift GB - A - 984 307 ist eine Entgasungsvorrichtung für Flüssigkeitsströme, insbesondere zum Entlüften von Wärmetausch-Kreisläufen bekannt. Die Vorrichtung enthält eine Rohrleitung zur Führung des Flüssigkeitsstromes und einen Entgasungsbehälter, der über einen Gasablaß mindestens zeitweise mit der Atmosphäre in Verbindung steht, wobei der Entgasungsbehälter zumindest zeitweise über eine Zulaufleitung mit der Rohrleitung in Strömungsverbindung steht und mindestens zeitweise unter einem Druck unterhalb des Druckes in der Rohrleitung am Einbauort steht, und enthält ferner eine Ablaufleitung mit eingeschalteter Druckpumpe, welche die Flüssigkeit, die unter dem Druck unterhalb des Druckes in der Rohrleitung steht, mindestens auf den Druck in der Rohrleitung bringt.

Von einer derartigen Entgasungsvorrichtung geht die Erfindung im Oberbegriff des Anspruchs 1 aus. Die bekannte Entgasungsvorrichtung arbeitet mit einem mehrstufigen Entgasungszyklus, in dessen Verlauf abwechselnd hohe Unter- und Überdrücke in zwei Teilbehältern erzeugt werden. Dies hat zur Folge, daß der Druckbehälter, die Verbindungsleitungen und die Ventile sehr massiv ausgeführt sein müssen, um den hohen Druckunterschieden standzuhalten.

Ferner werden der Einlauf der Flüssigkeit in den Entgasungsbehälter, der Umlauf der Flüssigkeit innerhalb des kesselartigen Behälters sowie der Auslauf zurück in den Heizungskreislauf durch mehrere druckabhängige Ventile gesteuert. Da die zur Steuerung herangezogene Flüssigkeit so gut wie immer verunreinigt ist, sind außer den Teilen der Anlage, die unvermeidlich mit der Flüssigkeit in Berührung kommen, auch die Steuerelemente durch Korrosion gefährdet.

Ausgehend von diesem Stand der Technik ist es daher die Aufgabe der Erfindung, eine Vorrichtung zum Entgasen von Flüssigkeitsströmen zu schaffen, in der ein unkomplizierter, mit niedrigen Druckdifferenzen arbeitender Entgasungszyklus abläuft.

Diese Aufgabe wird durch die Merkmale des Anspruchs 1 gelöst.

Zweckmäßige Weiterbildungen sind in den Unteransprüchen angegeben.

Im folgenden werden einige bevorzugte Ausführungsformen der erfindungsgemäßen Vorrichtung anhand von Ausführungsbeispielen beschrieben, zum besseren Verständnis sollen zum Teil schematisierte Abbildungen dienen. Hierbei zeigt

Fig. 1 einen Heizungskreislauf,
Fig. 2 eine Ausführungsform einer Entgasungsvorrichtung mit hydraulischem Antrieb,
Fig. 3 eine bevorzugte Ausführungsform der Entgasungsvorrichtung nach Fig. 2,
Fig. 4 eine Entgasungsvorrichtung zum kontinuierlichen Betrieb, die sich für den mobilen Einsatz eignet,
Fig. 5 eine bevorzugte Ausführungsform einer elektrisch betriebenen Entgasungsvorrichtung für den stationären Einsatz,
Fig. 6 die Luftauslaßvorrichtung der Entgasungsvorrichtung nach Fig. 5,
Fig. 7 eine kontinuierlich betriebene Entgasungsvorrichtung für den stationären, wie auch den mobilen Einsatz,

Fig. 8 ein Labyrinth zur Verwendung in den vorstehend aufgeführten Entgasungsvorrichtungen,

Fig. 9, 10 und 11 den Einbauort und den Aufbau einer besonders bevorzugten Ausführungsform mit zwei Entgasungsbehältern (Fig. 10) oder alternativ einem Entgasungsbehälter (Fig. 11).

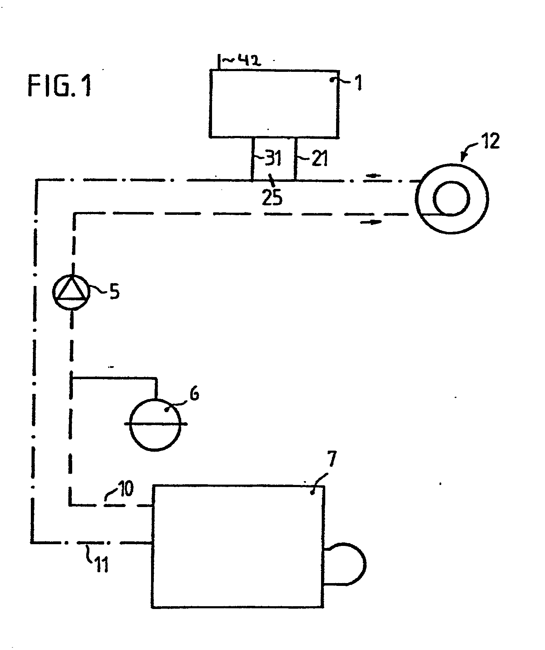

Das in den Figuren 1 bis 4 und 7 dargestellte Ausführungsbeispiel dient nur der Erläuterung der Erfindung.

Das Heizungssystem nach Fig. 1 weist einen Heizkessel 7 mit Brenner auf, aus dem das erwärmte Wasser im Vorlauf 10 von einer Umwälzpumpe 5 in das Wärmenutzungssystem 12 gefördert wird. Aus dem Wärmenutzungssystem 12 fließt das Wasser im Rücklauf 11 in den Heizkessel zurück. Am Vorlauf 10 ist das übliche Druckausdehnungsgefäß 6 angeschlossen. In den Kreislauf ist der Entgasungsbehälter 1 so eingeschaltet, daß zumindest ein Teil des Mediums über die Einlaufleitung 21 in den Entgasungsbehälter 1 einströmt und über die Ablaufleitung 31 aus dem Behälter wieder herausströmt. Der Entgasungsbehälter 1 kann, da er weitgehend temperaturunabhängig arbeitet, im wesentlichen an jeder Stelle des Systems angebracht sein.

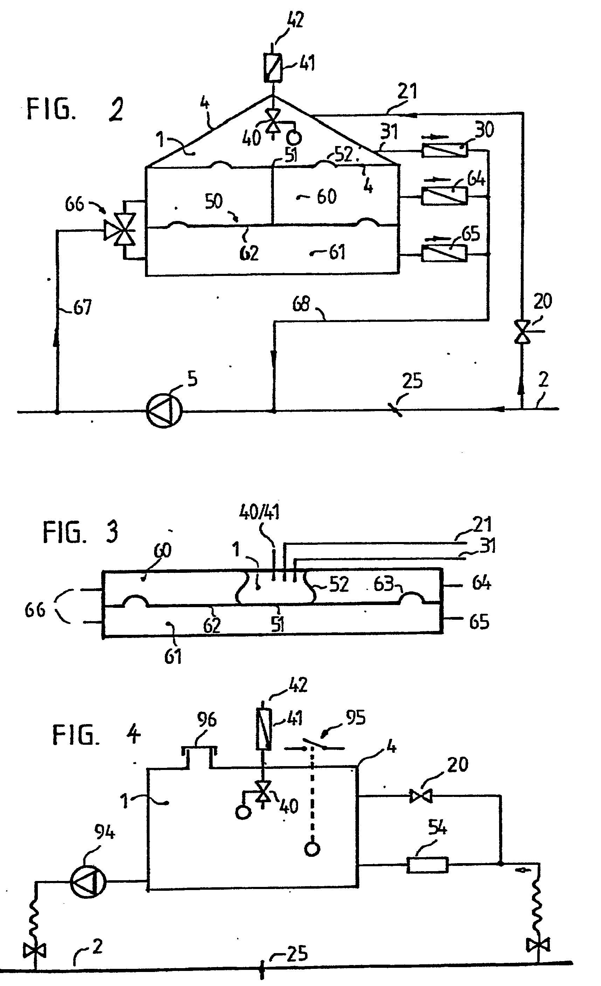

Bei der Anlage nach Figur 2 werden die Antriebsmittel durch zwei Kammern 60/61 gebildet, die durch einen Kolben 62 voneinander getrennt sind, der über eine Membran abgedichtet ist. Der Kolben 62 ist fest mit dem Kolben 51 des Entgasungsbehälters 1 verbunden. Die Kammern 60 und 61 stehen über Rückschlagventile 64 und 65 mit einer Antriebsableitung 68 so in Verbindung, daß Medium aus den Kammern 60/61 in die Kreislaufleitung 2 zurückströmen kann. Weiterhin sind die Kammern 60/61 mit einem Dreiweg - Steuerventil 66 verbunden, das die Rohrleitung 2 über die Antriebszuleitung entweder mit der Kammer 60 oder mit der Kammer 61 verbindet. Zwischen der Antriebszuleitung 67 und der Antriebsableitung 68 ist eine Pumpe 5 vorgesehen, wobei die Pumpe 5 gegebenenfalls auch mit der Umwälzpumpe identisch sein kann. Um ein größeres Druckgefälle zwischen der Antriebsableitung 68 und der Antriebszuleitung 67 zu erzeugen, wird das Drosselventil 25 in der Kreislaufleitung 2 relativ weit geschlossen.

Betätigt man das Steuerventil 66 derart, daß die Kammer 60 mit der Antriebszuleitung 67 in Verbindung steht, so ergibt sich eine Druckerhöhung in der Kammer 60 gegenüber der Kammer 61, so daß der Kolben 51 aus dem Entgasungsbehälter 1 herausgezogen wird, ein Teil des in der Kammer 61 enthaltenen Flüssigkeitsvolumens strömt durch das Rückschlagventil 65 in die Ablaufleitung 68, bzw. wird sogar aus der Kammer 61 unter weiterer Krafterzeugung herausgesaugt. Schaltet man das Ventil 66 um und verbindet die Kammer 61 mit der Antriebszuleitung 67, so wird der Kolben 51 in den Entgasungsbehälter 1 hineingedrückt, das überschüssige Volumen in der Kammer 60 entweicht über das Rückschlagventil 64 in die Antriebsableitung 68 bzw. wird aus der Kammer 60 herausgesaugt. Die Steuerung des Ventils 20 und der eigentliche Entgasungsvorgang verlaufen in einer der oben beschrieben Arten. Durch die hier dargestellten Antriebsmittel ist es möglich, ein System, das normalerweise eine Pumpe mit geringerer Leistung (geringem Druck bei geforderter Fördermenge) benötigt, lediglich mit einer entsprechend leistungsstärkeren Umwälzpumpe auszurüsten, ohne weitere, zum Beispiel motorische, Antriebsmittel anbringen zu müssen. Die Steuerung der Ventile 20 und 66 kann wieder wie oben beschrieben über eine Ablaufsteuerung oder druck-temperaturgesteuert, wie unten beschrieben, erfolgen.

In Figur 3 wird eine Anlage wie in Figur 2 beschrieben, jedoch weist diese Vorrichtung lediglich eine Kolbenplatte auf, die in ihrer mittleren Zone als Kolben 51 und in ihrer ringförmigen Randzone als Antriebsmittel 62 wirkt. Hierbei ist in einem Gehäuse eine einzige Kolbenplatte über eine Abdichtmembran 63 unter Bildung der zwei Kammern 60/61 eingespannt, die den Kolben 51 bildende mittlere Zone ist über eine ringförmige Membran 52 zum Deckel des Gehäuses abgedichtet und umschließt so den Entgasungsbehälter 1. Die Zu- und Ableitungen sind wie oben beschrieben angeschlossen. Selbstverständlich kann die in Figur 3 nur schematisch gezeigte Vorrichtung auch zum Beispiel in Form von Kugelschalen aufgebaut sein, wodurch sich eine Versteifung der Kolbenplatten 62 und 51 ergibt.

Bei der bevorzugten Ausführungsform der erfindungsgemäßen Vorrichtung nach Figur 4 handelt es sich um eine vorzugsweise mobil betriebene Anlage, die einen Entgasungsbehälter 1 aufweist, der über eine leistungsstarke Pumpe 94 mit der Rohrleitung 2 verbunden ist. Der Entgasungsbehälter 1 weist hierbei einen dicht verschließbaren Sole-Einfüllstutzen 96, die oben beschriebenen Gasablaßmittel 40, 41, 42 und einen füllstandsgesteuerten Schalter 95 (Schwimmerschalter) auf. Der Entgasungsbehälter 1 ist hierbei vorzugsweise vollständig in den Kreislauf einbezogen, wobei der rücklaufende Teil der Kreislaufleitung 2 über ein Reduzierventil 54 und parallel dazu über ein steuerbares Ventil 20 mit dem Behälter 1 in Verbindung steht. Im folgenden wird der Betrieb dieser bevorzugten Ausführungsform der erfindungsgemäßen Vorrichtung näher erläutert:

Wenn der Entgasungsbehälter 1 in die bereits befüllte Anlage eingeschaltet, aber noch leer ist, so ist der Füllstandsschalter 95 geschlossen. Das Ventil 20 und die Pumpe 94 sind derart mit dem Schalter 95 verbunden, daß bei niedrigem Flüssigkeitsspiegel im Behälter 1 das Ventil 20 geöffnet ist und die Pumpe still steht. Das Medium strömt also, so lange der Behälter noch leer ist, durch das Ventil 20 in den Behälter 1, bis der Schalter 95 entsprechend dem hohen Wasserstand schließt. Durch das Schließen des Schalters 95 wird das Ventil 20 geschlossen und die Pumpe 94 in Betrieb gesetzt. Durch die Pumpleistung entsteht im Behälter 1 ein Unterdruck, so daß durch das Reduzierventil 54 Wasser angesaugt werden kann. Das Druckreduzierventil 54 ist hierbei so eingestellt, daß es nur dann öffnet, wenn im Behälter 1 ein Unterdruck (relativ zum normalen Atmosphärendruck) herrscht. Während also die Pumpe 94 arbeitet, wird das durch das Reduzierventil 54 einströmende Medium fortwährend entgast und der Flüssigkeitsspiegel sinkt (bei konstantem Unterdruck im Behälter 1) langsam ab. Sobald der Flüssigkeitsspiegel so weit abgesunken ist, daß der Schalter 95 wieder schließt, wird die Pumpe 94 abgestellt, das Ventil 20 geöffnet und das zu entgasende Medium strömt in den Behälter 1 hinein und verdrängt hierbei die abgeschiedenen Gase über das Schwimmerventil 40 und das Rückschlagventil 41. Sobald der Schalter 95 wieder öffnet, wiederholt sich der Vorgang von neuem. Es versteht sich hierbei von selbst, daß man den Schalter 95 mit einer großen Hysterese ausstattet, damit der Entgasungsvorgang längere Zeit kontinuierlich erfolgen kann. Selbstverständlich kann man eine derartige Anlage auch stationär in ein System einbauen, wobei dann nur ein Teilstrom über die Anlage geführt wird.

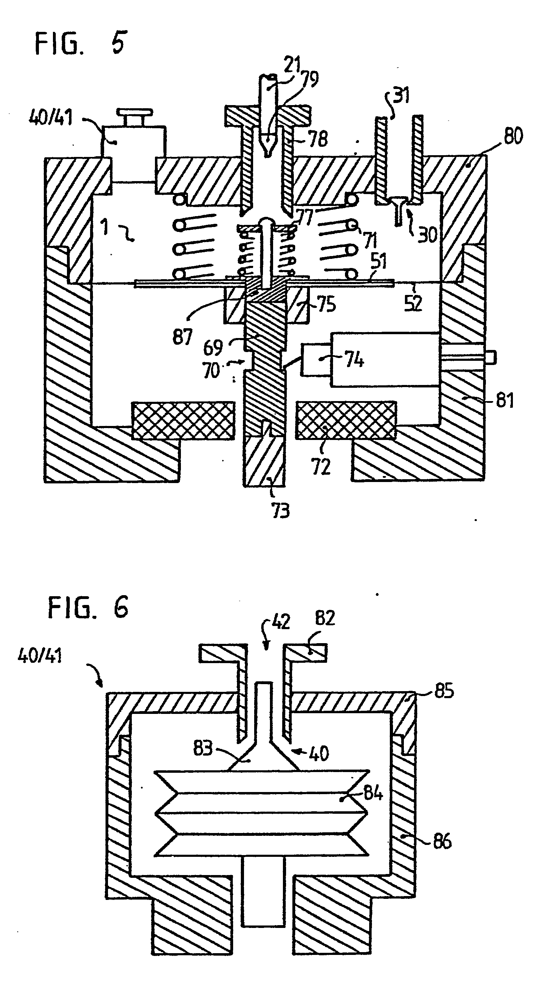

Bei der in den Figuren 5 und 6 gezeigten bevorzugten Ausführungsform der erfindungsgemäßen Vorrichtung ist ein zylindrischer Gehäusedeckel 80 auf einen Gehäusekörper 81 aufgeschraubt; zwischen den beiden Teilen ist eine ringförmige Abdichtmembran 52 eingespannt. Die Membran 52 ist in ihrem mittleren Teil von zwei Kolbenplatten 51 eingeschlossen, wobei die Kolbenplatten 51 und die Membran 52 eine mittige Bohrung aufweisen, durch die der Gewindezapfen einer Kolbenspannvorrichtung 87 ragt, die in eine Kolbenhalterung 75 eingeschraubt ist. Durch die Verschraubung sind die Kolbenplatten 51 und die Membran 52 fest und dicht verspannt. In das Innengewinde der Kolbenhalterung 75 ist auf der der Kolbenspannvorrichtung 87 gegenüberliegenden Seite ein nicht magnetisierbares Zwischenstück 69 mit einer Nut 70 eingeschraubt, die an ihrem anderen Ende einen Magnetkern 73 trägt. Auf der dem Magnetkern 73 gegenüberliegenden Seite weist die Kolbenspannvorrichtung 87 eine koaxiale Gewindebohrung auf, in die ein Bolzen eingeschraubt ist, auf dem eine Einlaßventildichtung 77 verschiebbar befestigt ist. Der Bolzen weist an seinem oberen Ende eine Verdickung auf, so daß die Scheibe 77 nicht über ihn hinaus gleiten kann. Die Scheibe 77 ist über Federmittel gegen die Kolbenspannvorrichtung 87 so verspannt, daß sie am oberen Ende des Bolzens, also den Kolbenplatten 51 gegenüberliegend sitzt. Zwischen der oberen Kolbenplatte 51 und dem Deckel 80 ist eine kräftige Feder 71 eingespannt, so daß der Kolben 51 im Normalzustand unter Vergrößerung des Volumens des Entgasungsbehälters 1 nach unten gedrückt wird. Gegenüber der Einlaßventildichtung 77 ist im Gehäusedeckel 80 ein Ventilsitz 78 angebracht, in den die Einlaufleitung 21 mündet, auf deren Ende ein Einlaßrückschlagventil 79 (z. B. ein formgepreßter Schlauch) sitzt. Der Gehäusedeckel 80 weist weiterhin eine Ablaufleitung 31 auf, die über ein Ablaufventil 30 verschlossen ist. Weiterhin ist der Deckel 80 von der Gasablaßvorrichtung 40/41 durchbrochen, die weiter unten näher beschrieben wird.

Unterhalb der Kolbenplatten 71 ist etwa in Höhe der Nut 70 ein Kippschalter 74 angeordnet, der mit seinem Knebel in die Nut 70 eingreift. Der Schalter 74 ist über eine Schraube in einem Langloch mit dem Körper 81 verbunden. Am unteren Ende des Körpers 81 ist die Wicklung 72 eines mit dem Magnetkern 73 zusammenwirkenden Hubmagneten fixiert.

Die Gasablaßvorrichtung 40/41 nach Figur 6 weist einen Deckel 85 und einen Boden 86 auf, die miteinander verschraubt sind. In den zylindrischen Deckel 85 ist mittig ein Ventilsitz 82 am oberen Ende eingeschraubt, wobei der Ventilsitz 82 mit seinem oberen Ende den Gasablaß 42 bildet. Im Inneren des aus Deckel 85 und Boden 86 bestehenden Gehäuses befindet sich ein gasdichter, elastischer Auftriebskörper 84, der hier als Faltenbalg ausgeführt ist. Der Auftriebskörper 84 trägt mittig auf seinem oberen Ende eine Luftauslaßventildichtung 83, die sich über einen Zapfen bis in den Ventilsitz 82 hinein erstreckt. An seinem unteren Ende weist der Auftriebskörper 84 einen Zapfen auf, der in eine mittige Bohrung des Bodens 86 unter Spiel eingelassen ist. Die Gasablaßvorrichtung funktioniert derart, daß bei hohem Flüssigkeitsstand der Schwimmer 84 nach oben gehoben wird, so daß das Ventil 40, bestehend aus Dichtung 83 und Sitz 82 verschlossen ist. Bei niedrigem Flüssigkeitsstand und einem Umgebungsdruck, der gleich dem Innendruck im Auftriebskörper 84 ist, ist das Ventil 40 geöffnet, bei einem Umgebungsdruck, der wesentlich unter dem Innendruck im Auftriebskörper 84 ist, spannt sich das untere Ende des Auftriebskörpers 84 gegen den Boden 86 und preßt so Ventildichtung 83 gegen den Ventilsitz 82 und verschließt den Gasablaß 42.

Die Vorrichtung nach Figur 5 und 6 funktioniert folgendermaßen:

Wenn der Schalter 74 eingeschaltet ist, so fließt Strom durch die Spule 72, die dann den Kern 73 anzieht und den Kolben 51 gegen die Kraft der Feder 71 nach oben drückt. Durch diese Kraft wird ein Überdruck in der Kammer 1 erzeugt, der einen Teil des Kammervolumens durch das Rückschlagventil 30 in die Ablaufleitung 31 strömen läßt. Wenn der Kolben 51 bzw. der Magnetkern 73 entsprechend der Leistung der Spule 72 ganz nach oben gezogen ist, wird der Schalter 74 mit seinem Knebel, der sich in der Nut 70 befindet, umgeschaltet und die Spule 72 abgeschaltet. Durch die Kraft der Feder 71 wird der Kolben 51 nach unten gedrückt, der Gasablaß 42 ist geschlossen, da der Flüssigkeitsstand hoch ist, die Einlaßventildichtung 77 sitzt, von der Anpreßfeder angedrückt, auf dem Ventilsitz 78. Da die Kammer 1 unter Unterdruck steht, werden die im Medium gelösten Gase abgeschieden. Durch die Entgasung des Mediums nähert sich der Unterdruck in der Kammer 1 dem Normaldruck (Atmosphärendruck), der Kolben 51 kann durch die Feder 71 weiter nach unten gedrückt werden, so daß der Flüssigkeitsstand sinkt. Sobald zum einen der Flüssigkeitsstand den Auftriebskörper 84 mit der Dichtung 83 nicht mehr gegen den Ventilsitz 82 preßt und auch der Unterdruck in der Kammer 1 nicht mehr ausreicht; um den Auftriebskörper 84 so weit auszudehnen, daß das Ventil 40 ganz geschlossen ist, strömt durch den Gasablaß 42 Luft ins Innere der Kammer 1, so daß diese unter Normaldruck steht. Durch diesen Druckausgleich kann die Feder 71 den Kolben 51 noch weiter nach unten drücken, so daß die Dichtung 77 vom Ventilsitz 78 abhebt und die Einlaßleitung 21 mit dem Innenraum des Behälters verbindet. Durch das einströmende Medium werden die abgeschiedenen Gase verdrängt und strömen durch den Gasablaß 42 so lange nach außen, bis der Schwimmer 84 das Ventil 40 schließt. Bei geschlossenem Ventil 40 steigt der Druck im Behälter 1 an und schiebt den Kolben 51 zusammen mit der Feder 71 weiter nach unten, bis der Schalter 74 über seinen Knebel, der in die Nut 70 eingreift, wieder umgeschaltet wird, so daß die Spule 72 wieder aktiv ist. Die Kraft der Spule 72 auf den Kern 73 schiebt den Kolben 51 wieder nach oben, wobei die Einlaßleitung 21 über das Rückschlagventil 79 verschlossen wird und ein Teil des im Behälter 1 enthaltenen Mediums über das Rückschlagventil 30 in die Auslaßleitung 31 einströmt. Sobald der Kolben 51 wieder seinen oberen Totpunkt erreicht hat und die Ventilplatte 77 auf dem Ventilsitz 78 fest anliegt, beginnt der beschriebene Vorgang von neuem.

Die hier aufgezeigte Vorrichtung ist also selbsttätig und benötigt keine zusätzliche Steuerung. Hierbei ist jedoch darauf zu achten, daß der Sitz der Dichtung 77 auf dem Ventilsitz 78 nicht absolut dicht ist (gegebenenfalls kann dies durch einen Bypass gesichert werden), da sonst ein stabiler Zustand erreicht werden kann und der Vorgang nicht mehr automatisch anläuft.

Die hier gezeigte selbsttätige Steuerung kann, in entsprechend modifizierter Art, selbstverständlich auch für die Vorrichtungen nach den Figuren 2 und 3 verwendet werden.

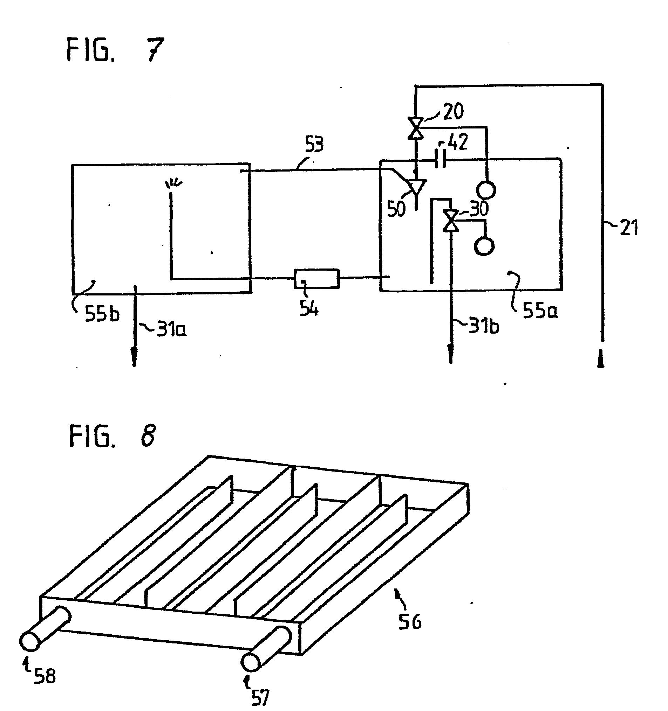

In Figur 7 ist eine weitere bevorzugte Ausführungsform der erfindungsgemäßen Vorrichtung gezeigt, die kontinuierlich betrieben werden kann. Hierbei ist die Einlaßleitung 21 mit ihrem Schwimmergesteuerten Absperrventil 20 mit einer Unterdruck erzeugenden Strahlpumpe 50 verbunden, wobei das durch die Leitung 21 strömende Medium den Unterdruck erzeugt und durch eine Leitung 53 aus einem Behälter 55b Luft und zu entgasendes bzw. entgastes Medium absaugt. Die Leitung 53 mündet also relativ weit oben liegend in den dichten Behälter 55b. Die Strahlpumpe 50 befindet sich in einem Behälter 55a, der über einen Gasablaß 42 (der gegebenenfalls durch ein Schwimmerventil gegen Ausströmen des flüssigen Mediums gesichert ist) mit der Atmosphäre in Verbindung steht. Am Boden des Behälters 55a mündet eine Leitung, die über ein Druckreduzierventil 54 in den Behälter 55b mündet. Ebenfalls am Boden des Behälters 55a angeordnet befindet sich eine Ablaufleitung 31b, die über ein Schwimmer-gesteuertes Ventil 30 abgesperrt werden kann. Die Funktionsweise dieser bevorzugten Ausführungsform der erfindungsgemäßen Vorrichtung ist folgendermaßen:

Bei niedrigem Flüssigkeitsstand im Behälter 55a ist das Ventil 20 geöffnet und das zu entgasende Medium 21 strömt durch die Strahlpumpe 50, so daß die Leitung 53 unter Unterdruck steht. Da der abgeschlossene Behälter 55b unter Unterdruck steht, strömt zu entgasendes Medium über das Reduzierventil 54 in den Behälter 55b. Das Reduzierventil 54 wird hierbei so eingestellt, daß im Behälter 55b sicher Unterdruck herrscht, die Leitung 53 ist über ein Rückschlagventil (wie gewöhnlich bei Strahlpumpen vorgesehen) gegen Zurückströmen des Mediums aus dem Behälter 55a in den Behälter 55b gesichert. Da im Behälter 55b Unterdruck herrscht, werden Gasblasen vergrößert und steigen auf, im Medium gelöste Gase werden abgeschieden. Steigt der Flüssigkeitsspiegel im Behälter 55a an, so wird das Ventil 20 geschlossen und das Ventil 30 geöffnet und die im Behälter 55a enthaltene Flüssigkeit über die Leitung 31b wieder dem Kreislauf zugeführt. Die Leitung 53 saugt nicht nur die im Behälter 55b ausgeschiedenen Gase, sondern auch entgastes Medium an, das dann vermischt mit dem über die Leitung 21 hineinströmenden Medium in den Behälter 55a gelangt und so lediglich teilweise entgast dem Kreislauf wieder zugeführt wird. Die aus der Kammer 50b abgeführten Gase können durch den Gasablauf 42, der vorteilhafterweise gegen das Ausströmen flüssigen Mediums durch ein Schwimmerventil gesichert ist, entweichen. Bei dieser Betriebsweise der Vorrichtung nach Figur 7 wird das entgaste Medium, vermischt mit zu entgasendem Medium dem Behälter 55a entnommen, da dieser Behälter unter Atmosphärendruck steht und somit eine geringere Druckdifferenz zum Druck in der Kreislaufleitung 2 aufweist, als das Innere des Behälters 55b. Bei dieser Vorrichtung ist es also möglich, mit relativ leistungsschwachen Pumpen zwischen der Ablaufleitung 31b und der Kreislaufleitung 2 auszukommen. Man kann als Absaugpumpe vorteilhafterweise eine mehrstufige Strahlpumpe vorsehen, die von der im Heizungssystem vorgesehen Umwälzpumpe mit Energie versorgt wird. Die auftretenden Druckdifferenzen zwischen dem Behälter 55a und der Kreislaufleitung 2 sind so relativ leicht realisierbar, während ein Absaugen über eine Leitung 31a, die mit der Kammer 55b kommuniziert, wesentlich höhere Pumpleistungen fordert.

Wenn man jedoch direkt aus der Unterdruckkammer 55b entgastes Medium (ohne Zusatz von zu entgasendem Medium) absaugt, so sieht man vorteilhafterweise ein Schwimmerventil vor, das die Ablaufleitung 31a bei niedrigem Flüssigkeitsstand verschließt. Die hier gezeigte Vorrichtung wird vorteilhafterweise mit handelsüblichen und darum sehr betriebssicheren Pumpen betrieben, die Strahlpumpen weisen keine Verschleißerscheinungen auf, so daß eine hohe Betriebssicherheit der gesamten Anlage gewährleistet ist.

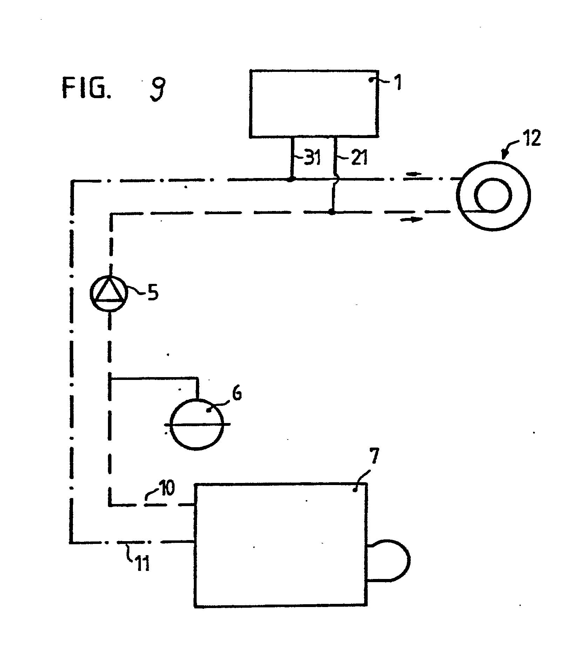

Bei allen bisher gezeigten Ausführungsformen der erfindungsgemäßen Vorrichtung wird der Innenraum des Entgasungsbehälters 1 vorteilhafterweise so ausgestaltet, daß die entstehenden, bzw. die mitgeführten Gasblasen einen möglichst kurzen Weg zur Oberfläche des flüssigen Mediums zurückzulegen haben, die Oberfläche aber möglichst groß ist. Eine Vorrichtung, die dies bewerkstelligt, ist in Figur 8 gezeigt, wobei ein Zufluß 57 mit einem Abfluß 58 über ein Labyrinth in einer flachen Wanne in Verbindung steht. Vorteilhafterweise werden mehrere derartige Labyrinthe hintereinander geschaltet bzw. übereinander angeordnet. Zur Verkürzung des Weges der Gasblasen und zur Vergrößerung der Oberfläche des zu entgasenden Mediums ist es auch vorteilhaft, die zu entgasende Flüssigkeit in den unter Unterdruck stehenden Entgasungsbehälter 1 unter Vernebelung einzusprühen oder Rieselkaskaden anzubringen. Zur Abscheidung von eventuell entstehendem Schaum eignen sich auch Drahtverhaue oder entsprechend angeordnete Lamellen und Siebe.

Bei einer weiteren bevorzugten Ausführungsform der vorliegenden Erfindung, die in den Figuren 9 bis 11 beschrieben ist, wird der Entgasungsbehälter 1, bzw. 1a über eine Zulaufleitung 21 an die Rohrleitung 2 angeschlossen. In der Zulaufleitung 21 ist ein ferneinstellbares Ventil 20 angebracht, das den Entgasungsbehälter 1 bzw. 1a mit der Rohrleitung 2 in Verbindung bringen oder von dieser abtrennen kann. Um den Druck im Entgasungsbehälter abzusenken, bringt man diesen zumindest zeitweise mit der Atmosphäre in Verbindung.

Im folgenden wird die in Figur 11 dargestellte bevorzugte Ausführungsform der erfindungsgemäßen Entgasungsvorrichtung, sowie ihre Funktionsweise im Detail beschrieben. Die Zulaufleitung 21, die über ein T-Stück mit der Rohrleitung 2 (nicht gezeigt) in Verbindung steht, ist über ein Ventil 20 an einen zur Atmosphäre im wesentlichen offenen Entgasungsbehälter 1 angeschlossen. Das Ventil 20 ist über eine Steuerleitung 120 mit einer Steuerung 100 verbunden, die als elektronische Vorrichtung aufgebaut ist. Vorzugsweise am tiefsten Punkt des Entgasungsbehälters 1 ist eine Druckpumpe 94 saugseitig angeschlossen, an der Druckseite der Druckpumpe 94 ist die Abflußleitung 31 angeschlossen, die wieder in die Rohrleitung 2 (nicht gezeigt) über ein T-Stück mündet. Eine Frischwasserleitung 8 mündet ebenfalls in den Druckbehälter 1 und wird durch ein schwimmergesteuertes Ventil 17 dann geöffnet, wenn der Flüssigkeitspegel im Entgasungsbehälter 1 einen Mindeststand erreicht hat. Weiterhin ist im Entgasungsbehälter ein Überlauf 9 vorgesehen, der so angeordnet und dimensioniert ist, daß selbst bei einem Klemmen des Schwimmerventiles 17 das zulaufende Frischwasser sicher abfließen kann. Ebenfalls im Entgasungsbehälter ist ein Füllstandsmelder 95 angeordnet, (hier als schwimmergesteuerter Schalter gezeichnet), der über die Steuerleitung 195 den tatsächlichen Flüssigkeitspegel im Entgasungsbehälter 1 der Steuerung 100 mitteilt. Die Druckpumpe 94 wird über die Steuerleitung 194 ebenfalls von der Steuerung 100 kontrolliert. Weiterhin ist ein Drucksensor 101 so im Rohrleitungssystem angeordnet, daß dieser Druckfühler 101 den Druck im System im wesentlichen unabhängig vom Betriebszustand des Ventiles 20 und der Pumpe mißt.

Die elektronische Steuerung 100 weist verschiedene Programmspeicher auf (z.B. PROM's oder EPROM's), sowie einen Zeitgeber.

Die Rohrleitung 21 mündet, wie in Figur 9 gezeigt, vorzugsweise kurz nach dem Druckstutzen der Umwälzpumpe 5 in das Heizungssystem, die Rückflußleitung 31 mündet in den Abschnitt der Rohrleitung 2, der aus dem Wärmetauschersystem 12 kommt.

Die Funktionsweise der oben beschriebenen erfindungsgemäßen Vorrichtung gemäß Fig. 9 und 11 ist nun folgende:

Bei der Erstbefüllung eines Heizungssystems stellt man die Steuerung 100 auf ein erstes Programm, welches das Ventil 20 zumindest solange offen hält, wie der Flüssigkeitspegel im Entgasungsbehälter 1 einen Maximalstand nicht überschreitet. Weiterhin wird die Druckpumpe 94 zumindest so lange in Betrieb gesetzt, wie der Flüssigkeitspegel im Entgasungsbehälter 1 einen Minimalstand nicht unterschreitet. Da anfänglich der Entgasungsbehälter 1 leer ist, öffnet das Schwimmerventil 17, so daß Frischwasser aus der Leitung 8 in den Entgasungsbehälter 1 strömt, worauf dieses Frischwasser über die Druckpumpe 94 und die Leitung 31 in das System eingespeist wird. Dieser Vorgang dauert so lange an, bis aus der Leitung 21 so viel Wasser strömt, daß die Wassermenge zusammen mit der zugeführten Frischwassermenge die von der Pumpe 94 abgesaugte Wassermenge überschreitet und somit der Wasserpegel im Entgasungsbehälter 1 steigt, bis der Schwimmerschalter 17 schließt. Da die Pumpe 94 ständig weiterläuft (ebenso natürlich die Umwälzpumpe 5), werden grobe Luftblasen aus dem Heizungssystem entfernt, so daß der Flüssigkeitsspiegel im Entgasungsbehälter 1 zumindest zeitweise wieder sinkt, das Schwimmerventil 17 öffnet und Frischwasser aus der Leitung 8 nachströmt. Wenn das Heizungssystem vollständig gefüllt ist, spielt sich der Pegel im Entgasungsbehälter 1 so ein, daß das Schwimmerventil 17 ständig geschlossen bleibt. Damit ist die Erstbefüllung des Systems abgeschlossen.

Im Dauerbetrieb wird ein anderes Programm in der Steuerung 100 verwendet. Bei diesem Programm wird das Ventil 20 geöffnet, bis ein Maximalstand im Entgasungsbehälter 1 erreicht ist. Da der Entgasungsbehälter 1 mit der Atmosphäre in Verbindung steht, das Heizungssystem jedoch unter Überdruck steht, entweicht ein Großteil der in der Flüssigkeit gelösten Gase entsprechend dem niedrigeren Druck. Nach einiger Zeit (bestimmt von dem Zeitgeber in der Steuerung 100) wird die Pumpe 94 eingeschaltet und saugt die Flüssigkeit aus dem Entgasungsbehälter 1 ab bzw. drückt die Flüssigkeit entgegen dem Systemdruck in das System zurück, und zwar so lange, bis der Druck im System, den der Druckfühler 101 mißt, dem vorgesehenen Druck entspricht. Falls also Flüssigkeit im System fehlt, wird die Pumpe 94 auch dann noch absaugen, wenn der Flüssigkeitspegel im Entgasungsbehälter 1 einen Punkt unterschritten hat, bei dem das Schwimmerventil 17 öffnet und Frischwasser aus der Leitung 8 nachströmt. Sobald der vorgesehene Systemdruck erreicht ist, wird die Pumpe 94 abgestellt und der oben beschriebene Vorgang wiederholt sich. Selbstverständlich ist es bei entsprechender Anordnung des Druckfühlers 101 auch möglich, das Ventil 20 sehr oft auf- und zuzumachen bzw. proportional zu regeln und die Pumpe 94 fast ständig laufen zu lassen. Diese letztere Betriebsweise erfordert jedoch eine unnötig hohe Betriebsdauer der Pumpe 94. Bei der diskontinuierlichen Betriebsweise hingegen kann das Medium im Entgasungsbehälter 1 vollständig ausgasen, bevor die Pumpe 94 eingeschaltet wird.

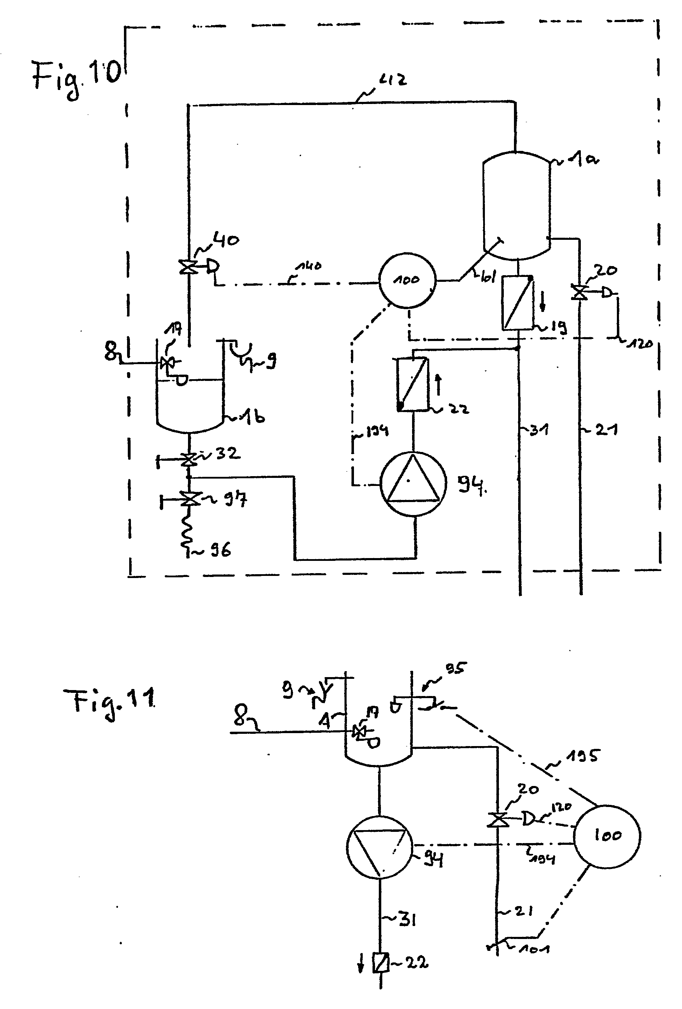

Bei einer weiteren bevorzugten Ausführungsform der vorliegenden Erfindung, wie sie in der Figur 10 dargestellt ist, sind eine Steuerung 100, eine Pumpe 94, ein Druckfühler 101 und ferneinstellbare Ventile vorgesehen, wie dies oben bereits beschrieben wurde. Vorzugsweise wird das in Figur 10 gezeigte System ebenfalls wie in Figur 9 gezeigt, im Heizungssystem angeordnet.

Bei der Ausführungsform nach Figur 10 sind zwei Entgasungsbehälter 1a und 1b vorgesehen, wobei der erste Entgasungsbehälter 1a über das ferneinstellbare Ventil 20 und die Leitung 21 mit der Rohrleitung 2 in Verbindung steht. Weiterhin ist vorzugsweise am höchsten Punkt des Druckbehälters 1a die Abgasleitung 42 vorgesehen, die durch ein ferneinstellbares Ventil 40 verschlossen werden kann und in den zweiten, mit der Atmosphäre in ständiger Verbindung stehenden zweiten Behälter 1b mündet. Am tiefsten Punkt des ersten Entgasungsbehälters 1a ist eine Ablaufleitung mit Rückschlagventil 19 angeschlossen, die in die Ablaufleitung 31 mündet. Die Ablaufleitung 31 mündet, wie in Figur 10 gezeigt, in das Rohrleitungssystem. Der zweite Entgasungsbehälter 1b weist ebenso wie bei der Ausführungsform nach Figur 11 einen schwimmergesteuerten Frischwasserzulauf und einen Überlauf 9 auf. Am tiefsten Punkt des zweiten Entgasungsbehälters 1b ist die Druckpumpe 94 saugseitig angeschlossen, wobei vorzugsweise zwischen Entgasungsbehälter 1b und Pumpe 94 ein Handventil 32 angebracht ist und ein zweites Handventil 97 mit Schlauchanschluß 96 ebenfalls an der Saugseite der Druckpumpe 94 hängt. Druckseitig mündet die Druckpumpe 94 über ein Rückschlagventil 22 in die Ablaufleitung 31. Im ersten Entgasungsbehälter 1a ist darüber hinaus der Druckgeber 101 angebracht. Der Druckgeber 101, die Ventile 20 und 40 und die Druckpumpe 94 werden von der Steuerung 100 über Steuerleitungen 120, 140 und 194 gesteuert. Die Steuerung ist, wie oben beschrieben, mit verschiedenen Programmspeichern ausgerüstet. Im folgenden wird die Funktionsweise der eben beschriebenen bevorzugten Ausführungsform der erfindungsgemäßen Vorrichtung näher beschrieben:

Bei der Erstbefüllung des Systems sind die Ventile 20, 40 und 32 geöffnet, die Pumpe 94 ist in Betrieb. Da der Pegelstand im zweiten Entgasungsbehälter 1b niedrig ist, ist das Schwimmerventil 17 geöffnet, Frischwasser strömt aus der Leitung 8 ein und wird von der Pumpe 94 ins System gedrückt. Durch die Einlaufleitung 21, den ersten Entgasungsbehälter 1a und den Gasablaß 42 strömt die Luft vor der nachfolgenden Flüssigkeit aus, bis das System gefüllt ist, der erste Entgasungsbehälter 1a voll ist und über die Leitung 42 überläuft und somit den zweiten Entgasungsbehälter 1b füllt, worauf das Schwimmerventil 17 schließt. In dieser Betriebsweise läßt man das System eine ganze Weile laufen, bis keine großen Luftblasen mehr entweichen. Will man (z.B. bei Solarheizungen etc.) Sole in das System einfüllen, so benützt man für die einzufüllende Sole den Schlauch 96 und schließt das Ventil 32, öffnet das Ventil 97. Auf diese Weise wird die Sole von der Druckpumpe 94 angesaugt.

Im Dauerbetrieb öffnet die Steuerung 100 bei zunächst geschlossenem Ventil 40 das Ventil 20, so daß aufgrund der von der Umwälzpumpe 5 erzeugten Druckdifferenz das Kreislaufmedium durch die Leitung 21 in den Entgasungsbehälter 1a strömt und über das Rückschlagventil 19 und die Leitung 31 in das System zurückfließt. Nach einer gewissen Zeit ist sichergestellt, daß im Entgasungsbehälter 1a im wesentlichen nur noch Medium mit relativ hohem Anteil an gelöstem Gas ist. Zu diesem Zeitpunkt schließt die Steuerung 100 das Ventil 20 und öffnet daraufhin das Ventil 40. Über die Leitung 42 steht dann der Entgasungsbehälter 1a unter Atmosphärendruck, so daß die in der Flüssigkeit gelösten Gase aus der Flüssigkeit austreten. Selbstverständlich wird hierbei ein gewisser Anteil an Flüssigkeit über die Leitung 42 in den zweiten Entgasungsbehälter 1b gelangen. Nach einer von der Steuerung 100 festgelegten Zeit wird das Ventil 40 wieder geschlossen und das Ventil 20 geöffnet, so daß der erste Entgasungsbehälter 1a wieder mit dem vollen Systemdruck beaufschlagt wird. Zu diesem Zeitpunkt mißt also der Druckfühler 101 den Systemdruck und die Steuerung 100 vergleicht aufgrund der ihr vorher einprogrammierten Werte den tatsächlichen Systemdruck mit einem Sollwert. Wenn der Systemdruck unterhalb des Sollwertes liegt, bedeutet dies, daß zuwenig Flüssigkeit im System ist, woraufhin die Steuerung 100 die Druckpumpe 94 anlaufen läßt (im Dauerbetrieb ist selbstverständlich das Ventil 97 geschlossen, das Ventil 32 geöffnet). Wenn die Pumpe 94 anläuft, so wird die während der vorhergehenden Entgasungsvorgänge über die Leitung 42 abgelassene Flüssigkeit wieder in den Kreislauf zurückgebracht, falls Flüssigkeit im System fehlt, wird diese über das Schwimmerventil 17 und die Frischwasserzufuhr 8 ergänzt.

Bei der vorher beschriebenen Arbeitsweise der Vorrichtung nach Figur 10 ist bei 2-Punkt Verhalten der Steuerung gewährleistet, daß die Druckpumpe 94 nur dann anlaufen muß, wenn der zweite Entgasungsbehälter 1b, der als Kapazität wirkt, relativ voll ist. Die Pumpe 94 arbeitet dann so lange, bis der Systemdruck wieder voll hergestellt ist. Durch diese Arbeitsweise wird eine extrem geringe Belastung der Druckpumpe 94 gefordert, während die Entgasungswirkung dennoch optimal ist.

Selbstverständlich kann in Heizungssystemen, die selbst über Druckpumpen nach Art der Druckpumpe 94 verfügen (z.B. Heizungssysteme in Hochhäusern) die Vorrichtung nach den Figuren 10 und 11 entsprechend modifiziert, also ohne Druckpumpe 94 ausgestattet werden.

Die bevorzugten Ausführungsformen der erfindungsgemäßen Vorrichtung nach den Figuren 10 und 11 ermöglichen einen vollautomatischen Betrieb einer Heizungsanlage auch dann, wenn z.B. Bodenheizungen mit den eingangs beschriebenen Schwierigkeiten verwendet werden, ohne daß eine manuelle Entlüftung oder eine Nachfüllung des Systems notwendig wären. Weiterhin ist durch diese Ausführungsformen gewährleistet, daß Heizungssysteme mit Solefüllung besonders leicht befüllt werden können und während des kontinuierlichen Entlüftungsbetriebes keinerlei Flüssigkeit durch den Entlüftungsvorgang verloren geht.

## Patentansprüche

1. Entgasungsvorrichtung für Flüssigkeitsströme, insbesondere zum Entlüften von Wärmetausch-Kreisläufen, mit einer Rohrleitung (2) zur Führung des Flüssigkeitsstromes und mit einem Entgasungsbehälter (1; 1a, 1b), der über einen Gasablaß mindestens zeitweise mit der Atmosphäre in Verbindung steht, wobei der Entgasungsbehälter zumindest zeitweise über eine Zulaufleitung (21) mit der Rohrleitung (2) in Strömungsverbindung steht und mindestens zeitweise unter einem Druck unterhalb des Druckes in der Rohrleitung (2) am Einbauort steht, und ferner eine Ablaufleitung (31) mit eingeschalteter Druckpumpe (94) vorgesehen ist, welche die Flüssigkeit, die unter dem Druck unterhalb des Druckes in der Rohrleitung (2) steht, mindestens auf den Druck in der Rohrleitung (2) bringt, dadurch gekennzeichnet,
daß die Zulaufleitung (21) des Entgasungsbehälters (1; 1a, 1b) ein ferneinstellbares Zulaufventil (20) aufweist, das von einer elektronischen Steuerung (100) zur Entnahme einer bestimmten Flüssigkeitsmenge geöffnet wird;
daß die entnommene Flüssigkeit während einer von der Steuerung (100) bestimmten Zeitspanne nach dem Schließen des Zulaufventils (20) unter Atmosphärendruck steht, und durch diese Druckverminderung die in der Flüssigkeit gelöste Gasmenge reduziert wird;
und daß die Druckpumpe (94) durch die elektronische Steuerung (100) eingeschaltet wird, um die unter Atmosphärendruck entgaste Flüssigkeit solange in den Kreislauf in der Rohrleitung (2) zurückzupumpen, bis ein Druckfühler (101) das Erreichen eines vorprogrammierten Systemdrucks im Flüssigkeitsstrom signalisiert.

2. Entgasungsvorrichtung nach Anspruch 1, dadurch gekennzeichnet, daß der Entgasungsbehälter (1) in dauernder Verbindung mit der Atmosphäre steht, der Entgasungsbehälter (1) über ein schwimmergesteuertes Einlaßventil (17) mit einer Frischwasserleitung (8) in Verbindung steht,
und ein Füllstandsmelder (95) im Entgasungsbehälter (1) angeordnet und mit der Steuerung (100) verbunden ist,
wobei die Steuerung (100) dann das Zulaufventil (20) schließt, wenn ein Maximalpegel im Entgasungsbehälter erreicht ist und die Druckpumpe (94) dann anlaufen läßt, wenn ein Minimaldruck in der Rohrleitung (2) herrscht.

3. Entgasungsvorrichtung nach Anspruch 2, dadurch gekennzeichnet, daß ein Druckfühler (101) vorgesehen ist, der mit der Steuerung (100) verbunden ist und einen Druck mißt, der zumindest zeitweise dem Druck in der Rohrleitung (2) entspricht.

4. Entgasungsvorrichtung nach Anspruch 1, dadurch gekennzeichnet, daß der Entgasungsbehälter (1a) nur über den Gasablaß (42) mit einem ferneinstellbaren Gasablaßventil (40) zeitweise mit der Atmosphäre in Verbindung steht,
der Gasablaß (42) in einen offenen zweiten Entgasungsbehälter (1b) mündet, der vorzugsweise über ein schwimmergesteuertes Einlaßventil (17) mit einer Frischwasserleitung (8) in Verbindung steht, die Druckpumpe (94) mit nachgeschaltetem Rückschlagventil (22) zwischen den zweiten Entgasungsbehälter (1b) und die Ablaufleitung (31) geschaltet ist, und der erste Entgasungsbehälter (1a) über ein Rückschlagventil (19) mit der Ablaufleitung (31) in Verbindung steht.

5. Entgasungsvorrichtung nach Anspruch 4, dadurch gekennzeichnet, daß ein Druckfühler (101) im ersten Entgasungsbehälter (1a) vorgesehen ist, der ebenso mit der Steuerung (100) verbunden ist, wie die ferneinstellbaren Ventile (20,40) und die Druckpumpe (94).

6. Entgasungsvorrichtung nach Anspruch 5, dadurch gekennzeichnet, daß die Steuerung (100) verschiedene Steuerprogramme und Mittel zum manuellen oder automatischen Anwählen der Steuerprogramme aufweist, wobei
bei einem ersten Programm das Einlaufventil (20) geöffnet, das Gasablaßventil (40) geschlossen ist und die Pumpe (94) bei Erreichen eines Minimaldruckes im Entgasungsbehälter (1) anläuft;
bei einem zweiten Programm das Gasablaßventil (40) geöffnet, das Einlaufventil (20) geschlossen ist;
und bei einem dritten Programm, das bei der Erstbefüllung eines Systems verwendet wird, die Pumpe (94) in Betrieb ist und die Ventile (20,40) geöffnet sind.

7. Entgasungsvorrichtung nach einem der vorhergehenden Ansprüche, dadurch gekennzeichnet, daß der Entgasungsbehälter (1) mit der Rohrleitung (2) über zwei Leitungen (21,31) mit Ventilen (20,30) in Verbindung steht, wobei die Rohrleitung (2) zwischen den Anschlußstellen der Leitungen (21,31) eine Drossel (25) aufweist.

8. Entgasungsvorrichtung nach einem der Ansprüche 1 bis 6, dadurch gekennzeichnet, daß der Entgasungsbehälter (1) mit der Rohrleitung (2) über zwei Leitungen (21,31) mit Ventilen (20,30) in Verbindung steht, wobei die Einlaufleitung (21) zum Entgasungsbehälter (1) zwischen einer Umwälzpumpe (5) und dem Wärmetauschersystem (12), die Ablaufleitung (31) vom Entgasungsbehälter (1) zwischen dem Wärmetauschersystem (12) und dem Heizkessel (7) in die Rohrleitung (2) münden.

9. Entgasungsvorrichtung nach einem der vorhergehenden Ansprüche, dadurch gekennzeichnet, daß der Entgasungsbehälter (1) über Ventilmittel (17,18) verschließbare Leitungen (8,9) zur Befüllung bzw. Entleerung des Kreislaufes, sowie gegebenenfalls einen Einfüllstutzen (96) zum Einfüllen von Sole aufweist.

## Claims

1. Degasification apparatus for fluid flows, in particular for deaeration of heat exchanger cycles, with a pipeline (2) for carrying the liquid flow and with a degasification chamber (1, 1a, 1b) which at least temporarily communicates to the atmosphere by a gas outlet, whereby the degasification chamber at least temporarily is in flow communication with the pipeline (2) via an input line (21) and at least temporarily is under a pressure below the pressure of the pipeline (2) and further, a discharge line (31) is provided with a pressure pump (94) connected therein, which brings the fluid having a pressure below the pressure of the pipeline (2), at least to the pressure in the pipeline (2), characterized in that the input line (21) of the degasification chamber (1, 1a, 1b) is provided with a remotely adjustable input valve (20), which is opened by an electronic control (100) for removing a certain amount of fluid; that the removed fluid stands under atmospheric pressure for a time period determined by the controller (100) after closing the input valve (20) and the amount of gas dissolved in the liquid is reduced by this pressure reduction; and that the pressure pump (94) is switched on by the electronic controller (100) to pump the liquid degassed under atmospheric pressure back into the cycle in the pipeline (2) up until a pressure sensor (101) signals that a pre-programmed system pressure in the fluid flow has been reached.

2. Degasification apparatus according to claim 1, characterized in that the degasification chamber (1) communicates continuously with the atmosphere, the degasification chamber (1) communicates with a fresh water line (8) via a floater-controlled inlet valve (17), and that a fill-level sensor (95) is arranged in the degasification chamber (1) and is connected to the controller (100), whereby the controller (100) closes the input valve (20) when a maximal level in the degasification chamber is reached and sets the pressure pump (94) in operation when a minimal pressure is present in the pipeline (2).

3. Degasification apparatus according to claim 2, characterized in that a pressure sensor (101) is provided, which is connected to the controller (100) and measures a pressure which at least temporarily corresponds to the pressure in the pipeline (2).

4. Degasification apparatus according to claim 1, characterized in that the degasification chamber (1a) temporarily communicates with the atmosphere only via a gas outlet (42) with a remotely adjustable gas outlet valve (40), that the gas outlet (42) joins into a second open degasification chamber (1b), which preferably communicates with a fresh water line (8) via a floater-control inlet valve (17), that the pressure pump (94) with following check valve (22) is connected between the second degasification chamber (1b) and the outlet line (31), and that the first degasification chamber (1a) communicates with the outlet line (31) via a check valve (19).

5. Degasification means according to claim 4, characterized in that a pressure sensor (101) is provided in the first degasification chamber (1a), which is also connected to the controller (100) as are the remotely-controllable valves (20, 40) and the pressure pump (94).

6. Degasification means according to claim 5, characterized in that the controller (100) comprises various control programs and means for manual or automatic selection of the control program, whereby for a first program, the inlet valve (20) is open, the gas outlet valve (40) is closed and the pump (94) starts when a minimal pressure in the degasification chamber (1) is reached; for a second program the gas outlet valve (40) is open, the inlet valve (20) is closed; and for a third program, used for the first filling of the system, the pump (94) is in operation and the valves (20, 40) are open.

7. Degasification apparatus according to one of the preceding claims, characterized in that the degasification chamber (1) communicates with the pipeline (2) via two lines (21, 31) having valves (20, 30), where the pipeline (2) has a throttle valve (25) between the connecting points of the lines (21, 31).

8. Degasification apparatus according to one of the claims 1 to 6, characterized in that the degasification chamber (1) communicates with the pipeline (2) via two lines (21, 31) having valves (20, 30), where the inlet line (21) to the degasification chamber (1) joins into pipeline (2) between the circulation pump (5) and the heat exchanger system (12), and the outlet line (31) from the degasification chamber (1) joins into the pipeline (2) between the heat exchanger system (12) and the heating boiler (7).

9. Degasification apparatus according to one of the preceding claims, characterized in that the degasification chamber (1) comprises lines (8, 9) closeable with valve means (17, 18) for filling or draining the cycle, and optionally a filling port (96) for filling with brine.

**Revendications**

1. Dégazéifieur pour courants de liquide, en particulier pour désaérer des cycles d'échange de chaleur, avec un conduit de tuyaux (2) pour guider les courants de liquide, et avec une chambre de dégazage (1; 1a, 1b), qui est au moins temporairement en contact avec l'atmosphère au moyen d'une sortie de gaz, la chambre de dégazage étant au moins temporairement en communication d'écoulement avec le conduit de tuyaux (2) par une conduite d'arrivée (21) et se trouvant au moins temporairement sous une pression plus basse que la pression dans le conduit de tuyaux (2) au lieu d'emplacement, et une conduite de décharge (31) avec une pompe à pression (94) intercalée est en autre prévu, amenant le liquide, qui se trouve sous la pression en dessous de la pression dans le conduit de tuyaux (2), au moins sous la pression qui règne dans le conduit de tuyaux (2), caractérisé en ce que la conduite d'arrivée (21) de la chambre de dégazage (1; 1a, 1b) comporte une valve d'entrée (20) réglable à distance, qui est ouverte par une commande électronique (100) pour le prélèvement d'une certaine quantité de liquide; en ce que le liquide prélevé se trouve sous pression atmosphérique durant un des lapses de temps déterminés par la commande (100) après la fermeture de la valve d'entrée (20), et en ce que la quantité de gaz dissous dans le liquide est reduite à cause de cette diminution de pression; et en ce que la pompe à pression (94) est enclenchée par la commande électronique (100) pour re- pomper le liquide dégazé sous pression atmosphérique dans le cycle dans le conduit de tuyaux (2) jusqu'à ce qu'un capteur de pression (101) signale qu'une pression de système préprogrammée est atteinte dans le courant de liquide.

2. Dégazéifieur selon la revendication 1, caractérisé
en ce que la chambre de dégazage (1) est en communication continue avec l'atmosphère,
en ce que la chambre de dégazage (1) est en communication avec une conduite d'eau fraîche (8) par une valve d'entrée (17) commandée par un flotteur,
et en ce qu'un indicateur de niveau (95) est placé dans la chambre de dégazage (1) et est relié avec la commande (100), la commande (100) fermant la valve d'entrée (20) quand un niveau maximal est atteint dans la chambre de dégazage et faisant démarrer la pompe à pression (94) quand il y a une pression minimale dans le conduit de tuyau (2).

3. Dégazéifieur selon la revendication 2, caractérisé en ce qu'il y a un capteur de pression (101), qui est relié à la commande (100) et qui mesure une pression, qui correspond au moins temporairement à la pression dans le conduit de tuyaux (2).

4. Dégazéifieur selon la revendication 1, caractérisé
en ce que la chambre de dégazage (1a) ne communique temporairement avec l'atmosphère que par la sortie de gaz (42) avec une valve de sortie de gaz (40) qui est reglable à distance,
en ce que la sortie de gaz (42) débouche en une deuxième chambre de dégazage (1b) ouverte, qui est raccordée à une conduite d'eau fraîche (8), de préférence par une valve d'entrée (17) commandée par un flotteur,
en ce que la pompe à pression (94) avec soupape de retenue (22), située à l'arrière, est placée entre la deuxième chambre de dégazage (1b) et la conduite de décharge (31),
et en ce que la première chambre de dégazage (1a) est raccordée à la conduite de décharge (31) par une soupape de retenue (19).

5. Dégazéifieur selon la revendication 4, caractérisé en ce qu'un capteur de pression (101) est prévu dans la première chambre de dégazage (1a) et est également relié à la commande (100), tout comme les valves (20, 40) réglables à distance et la pompe à pression (94).

6. Dégazéifieur selon la revendication 5, caractérisé en ce que la commande (100) comprend différents programmes de commande et des moyens pour la sélection manuelle ou automatique des programmes de commande, pour lequel durant un premier programme la valve d'entrée (20) et ouverte, la valve de sortie de gaz (40) est fermée et la pompe (94) se met en marche quand une pression minimale est atteinte dans la chambre de dégazage (1);
durant un deuxième programme la valve de sortie de gaz (40) est ouverte, la valve d'entrée (20) est fermée;
et durant un troisième programme, appliqué au premier remplissage d'un système, la pompe (94) est en opération et les valves (20, 40) sont ouvertes.

7. Dégazéifieur selon l'une des revendications précédentes caractérisé en ce que la chambre de dégazage (1) est reliée au conduit de tuyaux (2) par deux conduites (21, 31) à valves (20, 30), le conduit de tuyaux (2) comprenant un clapet d'étranglement (25) entre les points de raccordement des conduites (21, 31).

8. Dégazéifieur selon l'une des revendications 1 à 6, caractérisé en ce que la chambre de dégazage (1) est raccordée au conduit de tuyaux (2) par deux conduites (21, 31) à valves (20, 30), la conduite d'entrée (21) à la chambre de dégazage (1) débouche dans le conduit de tuyaux (2) entre une pompe de circulation (5) et le système d'échangeur de chaleur (12), la conduite de décharge (31) de la chambre de dégazage (1) débouchant dans le conduit de tuyaux (2) entre le système d'échangeur de chaleur (12) et la chaudière de chauffage (7).

9. Dégazéifieur selon l'une des revendications précédentes caractérisé en ce que la chambre de dégazage (1) comporte des conduites qui peuvent être fermées par des moyens à valves (17, 18) pour le remplissage ou la vidange des cycles tout comme, le cas échéant, une tubulure de remplissage (96) pour le remplissage avec de la saumure.

FIG. 1

FIG. 2

FIG. 3

FIG. 4

FIG. 5

FIG. 6

FIG. 7

FIG. 8

FIG. 9

Fig.10

Fig.11